# DEMANDE DE BREVET EUROPEEN

(11) **EP 1 736 584 A2**
(43) Date de publication de la demande: **27.12.2006**
(21) Numéro de dépôt: 06300716.5
(22) Date de dépôt: 22.06.2006
(51) Int. Cl.: D04H 1/46, D04H 1/54, D04H 1/58, D04H 13/00, C04B 30/02

(54) **Procédé de fabrication d'un matériau isolant à partir de fibres vierges et/ou issues de déchets, matériau isolant obtenu**

(30) Priorité: 22.06.2005 FR 0551716; 29.07.2005 FR 0552374
(71) Demandeur: Saertex France, 38510 Arandon (FR)
(72) Inventeur: Wagener, Gert, A-48282, EMSDETTEN (DE); Klethi, Thierry, F-38510, BRANGUES (FR)
(74) Mandataire: Fantin, Laurent

(57) **Abrégé**

L'objet de l'invention est un procédé de fabrication d'un matériau isolant à partir de fibres vierges et/ou de déchets de fibres, caractérisé en ce qu'il consiste à faire subir aux fibres vierges et/ou aux fibres issues de ces déchets les étapes suivantes :
- cardage des fibres vierges et/ou issues de déchets afin de séparer et d'orienter ces fibres,
- dépose de ces fibres sur un tapis pour obtenir un mat,
- liaison des fibres entre elles, et
- ondulation de ce mat de fibres liées.

## Description

La présente invention concerne un procédé de fabrication d'un matériau isolant à partir de fibres vierges et/ou issues de déchets, notamment de fibres de verre. L'invention couvre aussi le matériau isolant obtenu.

On sait que de nombreux procédés de fabrication de produits en matériaux composites à partir de fibres. Ces fabrications génèrent d'ailleurs des déchets de fibres.

En effet, ces procédés consistent à préparer des renforts à partir de mats de fibres de différentes natures, ces renforts étant destinés à être inclus dans des matrices de résines thermodurcissables ou thermoplastiques.

Ces renforts sont destinés à des pièces de formes particulières tandis que les mats de fibres sont fabriqués en continu et se présentent sous formes de renforts en rouleaux de différentes largeurs.

Ces renforts sont donc nécessairement découpés au profil de la pièce à réaliser, ce qui conduit à des chutes de matière.

Cette matière, par exemple dans le cas de non tissés, comprend des fibres qui n'ont aucunement été souillées.

Par contre, ces fibres sont de différentes longueurs, de différents diamètres et peuvent être regroupées si nécessaire en fonction de leur nature, fibres de verre, fibres naturelles par exemple.

Ces déchets sont un coût pour le produit final puisqu'il s'agit de chutes et ceci est la plupart du temps le cas pour les produits manufacturés.

Par contre, il y a un surcoût du fait de l'évacuation et de l'élimination de ces déchets.

Comme ordre de grandeur, on peut citer des déchets composés de fibres de diamètres compris entre 5 et 30 µm et de longueur d'au moins 2,5 cm à de nombreux centimètres.

La fibre de verre est la plus utilisée dans les matériaux composites donc celle que l'on retrouve en plus grande quantité sur le marché des déchets mais pas uniquement.

On sait aussi que le marché de l'isolation, notamment dans le bâtiment, est à la recherche de matériaux de moins en moins chers afin de pouvoir isoler toutes les parties construites, générant des économies d'énergie pour les utilisateurs.

On sait aussi que cette demande en matériaux isolants est de plus en plus élevée et que les déchets peuvent ne pas suffire. Dans ce cas, des fibres vierges peuvent alors être utilisées soit en partie avec des fibres issues de déchets soit intégralement en fibres vierges.

Il existe aussi une demande pour l'utilisation des fibres naturelles issues de déchets.

Le procédé de fabrication d'un matériau isolant selon la présente invention permet de recycler les déchets notamment immédiatement sur le lieu où les déchets sont générés si les quantités sont suffisantes, en faisant appel à des matériels de fabrication existants mais actuellement utilisés ni dans la succession d'étapes revendiquée ni dans le but poursuivi dans la présente invention.

Le procédé est maintenant décrit selon un mode de réalisation particulier avec des variantes sans que ce procédé puisse être considéré comme limitatif.

Une planche de dessins est annexée sur laquelle deux figures représentent :
- figure 1 : une vue d'une première géométrie, et
- figure 2 : une vue d'une seconde géométrie dite à chevrons.

Les fibres vierges ou provenant de déchets sont placées dans une trémie avant d'être traitées par des moyens de cardage qui assurent une séparation et une orientation dans le sens longitudinal de ces fibres de façon à disposer de fibres parallèles les unes aux autres.

Ces fibres disposées principalement dans une même direction, celle du déplacement dans la chaîne de fabrication, sont ensuite déposées sur un premier tapis transporteur avec une épaisseur donnée.

Cette épaisseur est obtenue en fonction de la vitesse relative de ce tapis transporteur et du volume de fibres unidirectionnelles déposé.

Le procédé prévoit de conférer à ce mat des propriétés mécaniques et dans ce but, soit il s'agit d'un procédé mécanique d'aiguilletage ou autres mais uniquement par travail mécanique soit il est prévu d'introduire un liant dans ce mat de fibres ainsi produit, soit encore une combinaison des deux solutions.

Le procédé mécanique consiste à rapporter de façon régulière une ou plusieurs couches de fibres afin de lier les fibres vierges ou issues de déchets et cette ou ces couches de fibres de structure.

Une première voie d'introduction d'un liant consiste à introduire au sein des fibres vierges ou issues de déchets un liant sous forme de fibres thermofusibles. Ces fibres thermofusibles sont choisies en fonction de la nature du matériau constituant les fibres vierges ou les fibres de recyclage de façon à ce qu'elles assurent ultérieurement ainsi que cela va être décrit, la cohésion du mat.

Ces fibres thermofusibles sont introduites à raison de taux de l'ordre de 10 à 20% pour donner un ordre d'idées.

Une autre voie consiste à inclure de la poudre de liant thermofusible au sein du mat de fibres unidirectionnelles.

Une autre voie d'introduction d'un liant consiste à projeter un liant sur les fibres vierges ou issues de déchets au moment de la dépose sur le premier tapis.

Dans tous les cas, il faut que le liant soit dispersé au sein du mat de façon homogène.

En sortie de dépose des fibres, l'étape suivante consiste en une étape de chauffage du mat soit pour polymériser le liant dépose par projection, soit pour faire fondre et polymériser la poudre de liant thermofusible, soit encore pour faire fondre et polymériser les fibres thermofusibles introduites dans le mat.

Le mat ainsi réalisé présente des épaisseurs de l'ordre de 5 à 300 mm, avec une densité de 10 à 200 g/m².

Ce mat est ensuite mis en forme pour constituer le matériau isolant recherché.

Cette mise en forme consiste selon le mode principal de réalisation à former des ondulations du mat de fibres liées tel que fabriqué.

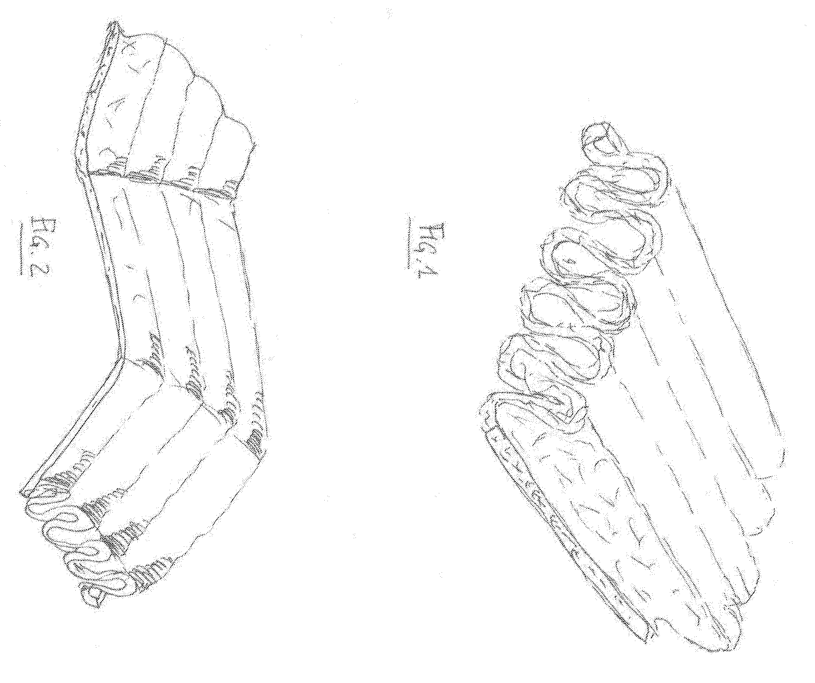

Ces ondulations présentent un angle compris entre 90° et 140 à 150° par rapport à l' horizontale, comme montré sur la figure 1.

La densité des ondulations est comprise entre 1 et 10 ondulations par centimètre linéaire.

Le but est de former un volume le plus important possible avec le moins possible de fibres de sorte à emprisonner un volume d'air très important qui est garant d'un fort pouvoir isolant.

Ainsi, le matériau obtenu présente un taux de 10 % maximum de fibres par unité de volume.

Selon un autre mode de réalisation perfectionné représenté sur la figure 2, le mat de fibres est ondulé comme dans le mode principal de réalisation et comporte de plus, des ondulations selon un axe perpendiculaire à celui des premières ondulations de sorte à générer des motifs géométriques du lippe chevrons. Cet agencement permet de conférer une plus grande raideur dans le pian. Cette raideur résulte de la présence de plis dans au moins deux directions.

Il est ensuite possible de réaliser des complexes à partir de ce matériau. De fait, le produit final peut comporter plusieurs couches ondulées de matériau à fibres unidirectionnelles, superposées les unes sur les autres.

Ces couches peuvent être liées par tout moyen y compris par interposition d'un liant.

Ces couches peuvent être superposées, qui plus est, de façon croisée pour améliorer la résistance mécanique de l'ensemble.

En variante, sur une face du matériau isolant ondulé ainsi réalisé il peut être rapporté une feuille réflectrice en matériau métallique tel que de l'aluminium. La liaison est obtenue par exemple par collage. Ceci renforce l'effet isolant et permet aussi une manipulation plus aisée, notamment un conditionnement sous forme de rouleaux.

Selon une autre variante, le matériau isolant ondulé peut porter deux feuilles de matériau métallique, une sur chaque face. L'invention prévoit aussi plusieurs feuilles métalliques interposées entre les couches si nécessaire pour réaliser des complexes sophistiqués.

La feuille peut aussi être en matériau cellulosique tel que du papier kraft sur au moins une des faces.

Ce type de matériau présente un rôle de pare vapeur surtout s'il a subi un traitement hydrophobe par dépose d'une cire par exemple.

Le matériau ainsi obtenu présente de bonnes propriétés isolantes et permet une utilisation pour tout ou partie de fibres provenant des déchets de fabrication d'autres renforts, évitant des recyclages inutiles et assurant une valorisation. Le matériau peut aussi être issu de fibres vierges uniquement, de la même façon, avec le même procédé pour combler la demande en matériaux isolants finis lorsque les déchets sont insuffisants.

Les fibres peuvent être d'origine synthétique ou naturelle.

## Revendications

1. Procédé de fabrication d'un matériau isolant à partir de fibres vierges et/ou de déchets de fibres, **caractérisé en ce qu'**il consiste à faire subir aux fibres vierges et/ou aux fibres issues de ces déchets les étapes suivantes :
- cardage des fibres vierges et/ou issues de déchets afin de séparer et d'orienter ces fibres,
- dépose de ces fibres sur un tapis pour obtenir un mat,
- liaison des fibres entre elles, et
- ondulation de ce mat de fibres liées selon au moins une direction.

2. Procédé de fabrication d'un matériau isolant selon la revendication 1, **caractérisé en ce que** la liaison des fibres entre elles est réalisée par voie mécanique.

3. Procédé de fabrication d'un matériau isolant selon la revendication 2, **caractérisé en ce que** la liaison mécanique comprend aussi au moins une couche rapportée.

4. Procédé de fabrication d'un matériau isolant selon la revendication 1, **caractérisé en ce que** la liaison des fibres entre elles est réalisée de façon chimique.

5. Procédé de fabrication d'un matériau isolant selon la revendication 4, **caractérisé en ce que**, pour réaliser la liaison chimique, on introduit des fibres thermofusibles dans les fibres issues de déchets et on chauffe l'ensemble pour assurer la liaison de ces fibres issues de déchets par fusion des fibres thermofusibles.

6. Procédé de fabrication d'un matériau isolant selon la revendication 4, **caractérisé en ce que**, pour réaliser la liaison chimique, on projette un liant sur les fibres issues de déchets et on chauffe l'ensemble pour provoquer la polymérisation du liant.

7. Procédé de fabrication d'un matériau isolant selon la revendication 4, **caractérisé en ce que**, pour réaliser la liaison chimique, on projette un liant sous forme de poudre thermofusible et on chauffe pour provoquer la fusion de la poudre.

8. Procédé de fabrication d'un matériau isolant selon l'une quelconque des revendications précédentes, **caractérisé en ce que** les ondulations sont réalisées avec un angle compris entre 90° et 140 à 150° par rapport à l'horizontale.

9. Procédé de fabrication d'un matériau isolant selon l'une quelconque des revendications précédentes, **caractérisé en ce qu'**il consiste à réaliser des ondulations suivant deux directions sensiblement perpendiculaires pour obtenir des motifs à chevrons.

10. Procédé de fabrication d'un matériau isolant selon l'une quelconque des revendications précédentes, **caractérisé en ce qu'**il consiste à utiliser uniquement des fibres issues de déchets.

11. Matériau isolant obtenu par la mise en oeuvre du procédé selon l'une quelconque des revendications 1 à 10, **caractérisé en ce que** le mat présente des épaisseurs de l'ordre de 5 à 300 mm, avec une densité de 10 à 200 g/m².

12. Matériau isolant selon la revendication 11, **caractérisé en ce qu'**il comprend des ondulations suivant au moins une direction.

13. Matériau isolant selon la revendication 11 ou 12, **caractérisé en ce qu'**il comprend au moins deux mats superposés de fibres ondulées.

14. Matériau isolant selon la revendication 13, **caractérisé en ce que** les deux mats de fibres ondulées sont disposés avec des orientations croisées.

15. Matériau isolant selon la revendication 12, 13 ou 14, **caractérisé en ce que** la densité des ondulations est comprise entre 1 et 10 ondulations par centimètre linéaire.

16. Matériau isolant selon l'une des revendications 11 à 15, **caractérisé en ce que** le matériau obtenu présente un taux maximal de 10 % de fibres par unité de volume.
